# EUROPÄISCHE PATENTSCHRIFT

(11) **EP 3 605 034 B1**
(45) Veröffentlichungstag und Bekanntmachung des Hinweises auf die Patenterteilung: **22.09.2021**
(21) Anmeldenummer: 18186666.6
(22) Anmeldetag: 31.07.2018
(51) Int. Cl.: G01F 25/00, B02C 4/28, G01F 23/20, G01F 22/00

(54) **EINLAUFANORDNUNG FÜR EINEN WALZENSTUHL, WALZENSTUHL MIT EINER SOLCHEN EINLAUFANORDNUNG, VERFAHREN ZUR MAHLGUTFÜLLSTANDERMITTLUNG EINES VORRATSBEHÄLTERS EINES WALZENSTUHLS**
INLET MODULE FOR A ROLLER MILL, ROLLER MILL WITH SUCH AN INLET MODULE, METHOD FOR DETERMINING THE FILL LEVEL OF A STORAGE TANK OF A ROLLER MILL
DISPOSITIF D'ENTRÉE POUR UN MOULIN À CYLINDRES, MOULIN À CYLINDRES DOTÉ D'UN TEL DISPOSITIF D'ENTRÉE, PROCÉDÉ DE DÉTERMINATION DU NIVEAU DE REMPLISSAGE DE PRODUIT DE BROYAGE D'UN RÉSERVOIR D'ALIMENTATION D'UN MOULIN À CYLINDRES

(43) Veröffentlichungstag der Anmeldung: 05.02.2020
(73) Patentinhaber: Bühler AG, 9240 Uzwil (CH)
(72) Erfinder: Rickenbach, Daniel, 9547 Wittenwil (CH); Fischer, Daniel, 9103 Schwellbrunn (CH); Marinos, Dimitros, 8152 Glattpark (Opfikon) (CH)
(74) Vertreter: Hepp Wenger Ryffel AG

(56) Entgegenhaltungen:
- US-A- 5 433 391
- US-A1- 2016 067 713

## Beschreibung

Die Erfindung betrifft eine Einlaufanordnung für einen Walzenstuhl, eine Kontrolleinheit für eine Einlaufanordnung sowie einen Walzenstuhl mit einer erfindungsgemässen Einlaufanordnung. Die Erfindung betrifft ferner ein Verfahren zur Mahlgutfüllstandermittlung eines Vorratsbehälters eines Walzenstuhls.

Bei Walzenstühlen aus dem Stand der Technik wird das Mahlgut vor der jeweiligen Mahlpassage einem Vorratsbehälter, z.B. durch Gravitation, zugeführt und dort aufgestaut. Das Mahlgut wird dann mit Hilfe einer Austragsvorrichtung, z.B. einer Speisewalze, dosiert und in den Mahlspalt befördert.

US 2016/0067713 A1 beschreibt eine Einlaufanordnung für einen Walzenstuhl gemäß dem Stand der Technik.

Am Beginn des Mahlvorganges wird zuerst die Füllhöhe des Vorratsbehälters manuell, z.B. von einem Operator, als Soll-Niveau vorgegeben. Dabei ist zu berücksichtigen, dass zum einen genügend freies Puffervolumen zur Verfügung steht (Niveau möglichst tief), aber zum anderen das Mahlgut über die gesamte Länge der Walzen dosiert werden kann (Niveau möglichst hoch).

Mit einer Messvorrichtung (zum Beispiel Kraftaufnehmer) wird beim Betreiben eine Abweichung des Ist-Niveaus zum Soll-Niveau detektiert. Eine Regelvorrichtung stellt sicher, dass der Austrag so angepasst wird, dass das Ist-Niveau möglichst dem Soll-Niveau entspricht. Kraftaufnehmer haben den Nachteil, dass der Füllstand des Mahlguts nicht direkt, sondern indirekt gemessen wird und somit eine Kalibrierung vorgenommen werden muss, welche stark von den Mahlguteigenschaften, insbesondere von der Mahlgutdichte, abhängt.

Nachteilig bei solchen Messanordnungen ist, dass das von der Messvorrichtung gemessene Ist-Niveau unter Umständen nicht mit dem tatsächlichen Füllstand des Vorratsbehälters übereinstimmt. Der Operator muss somit stets manuell den tatsächlichen Füllstand überprüfen und eine Korrektur des ermittelten Ist-Niveau vornehmen.

Es ist daher Aufgabe der vorliegenden Erfindung eine Einlaufanordnung für einen Walzenstuhl, eine Kontrolleinheit für eine Einlaufanordnung, einen Walzenstuhl sowie ein Verfahren zur Füllstandermittlung eines Vorratsbehälters anzugeben, welche die Nachteile des Bekannten vermeiden und insbesondere eine einfache, kostengünstige und automatische Füllstandermittlung des Vorratsbehälters ermöglichen.

Die Aufgabe wird von einer Einlaufanordnung, einer Kontrolleinheit, einem Walzenstuhl und einem Verfahren mit den Merkmalen der unabhängigen Ansprüche gelöst.

Es ist an dieser Stelle zu vermerken, dass im Sinne der vorliegenden Erfindung als Walzenstuhl eine Walzenanordnung gemeint wird, welche nicht nur in der Müllerei sondern auch bei anderen Lebensmitteln und Futtermitteln Anwendung finden kann.

Die Einlaufanordnung umfasst einen Vorratsbehälter mit wenigstens einem Mahlguteinlass und wenigstens einem Mahlgutauslass.

Die Einlaufanordnung umfasst ferner wenigstens eine am Vorratsbehälter angeordnete Dosiervorrichtung zum Dosieren von Mahlgut in einen Mahlspalt des Walzenstuhls durch den Mahlgutauslass. Die Dosiervorrichtung kann einfach als Spalt ausgebildet sein, wobei die Austragsmenge ggf. durch Änderung einer Spaltbreite, z.b. mit Hilfe einer Drosselklappe, einstellbar sein kann. Die Dosiervorrichtung kann ferner weitere Elemente umfassen, welche beispielsweise die Verteilung von Mahlgut im Vorratsbehälter unterstützen. Diese können beispielsweise eine Fördereinrichtung wie eine Paddel- oder Schneckenwelle umfassen. Auch kann die Dosiervorrichtung eine Speisewalze umfassen, welche zum Fördern vom Mahlgut vom Mahlgutauslass zum Mahlspalt des Walzenstuhls ausgebildet ist.

Die Dosiervorrichtung kann entweder dem Vorratsbehälter nachgeschaltet sein, d.h. zwischen Mahlspalt und Vorratsbehälter angeordnet sein. Alternativ oder zusätzlich kann vorgesehen sein, dass die Dosiervorrichtung dem Vorratsbehälter vorgeschaltet ist, so dass die Mahlgutmenge, welche in den Vorratsbehälter gefördert wird, dosiert werden kann.

Am Vorratsbehälter ist ein Kraftaufnehmer zur Bestimmung einer durch das Mahlgut ausgeübten Gewichtskraft angeordnet.

Am Vorratsbehälter ist ferner ein Niveausensor zur Ermittlung des Erreichens eines Mahlgut-Niveaus angeordnet.

Der Niveausensor liefert somit einen Wahrheitswert darüber, ob der Füllstand im Vorratsbehälter das Mahlgut-Niveau erreicht hat und ggf. dieses übersteigt oder nicht.

Kraftaufnehmer und/oder Niveausensor können dabei ausserhalb oder innerhalb des Vorratsbehälters angeordnet sein. Beispielsweise kann der Vorratsbehälter mit einem Kraftaufnehmer verbunden sein, beispielsweise an einem Kraftaufnehmer aufgehängt oder auf einem Kraftaufnehmer gelagert sein. Erfindungsgemäss muss lediglich eine durch das Mahlgut ausgeübte Gewichtskraft im Vorratsbehälter sowie das Erreichen eines Mahlgut-Niveaus ermittelbar sein.

Bevorzugt ist der Niveausensor im Vorratsbehälter, besonders bevorzugt in der oberen Hälfte des Vorratsbehälter, angeordnet.

Bevorzugt ist der Kraftaufnehmer im Vorratsbehälter, besonders bevorzugt in einem unteren Bereich des Vorratsbehälters, angeordnet.

Dies bedeutet, dass der Kraftaufnehmer derart angeordnet ist, dass bei einem niedrigen Füllstand des Vorratsbehälters eine Gewichtskraft ermittelt werden kann und, dass das Mahlgut den Niveausensor insbesondere erst erreicht, wenn der Vorratsbehälter zumindest zur Hälfte seines Fassungsvermögens befüllt worden ist.

Die Einlaufanordnung umfasst ferner eine Kontrolleinheit, welche mit dem Kraftaufnehmer und dem Niveausensor verbunden oder verbindbar ist.

Die Kontrolleinheit kann dabei eine dedizierte Kontrolleinheit der Einlaufanordnung sein, welche mit einer übergeordneten Kontrolleinheit, beispielsweise eines Walzenstuhls, verbunden wird. Dies ist insbesondere vorteilhaft, wenn die Einlaufanordnung zum Nachrüsten von bereits bestehenden Walzenstühlen gedacht ist. Alternativ dazu kann die Kontrolleinheit in einer übergeordneten Kontrolleinheit, beispielweise in der Kontrolleinheit eines Walzenstuhls oder in einer Anlagesteuerung, implementiert sein.

Erfindungsgemäss ist die Kontrolleinheit dazu ausgebildet, aus der vom Kraftaufnehmer ermittelten Gewichtskraft einen ersten Füllstand des Vorratsbehälters zu ermitteln.

Die Kontrolleinheit ist ferner dazu ausgebildet ist, eine charakteristische Füllstandkurve basierend auf dem ermittelten ersten Füllstand und dem vom Niveausensor ermittelten Füllstand-Niveau zu ermitteln.

Bei dem ersten Füllstand handelt es sich bevorzugt um ein vorbestimmtes Füllstand-Niveau, welches der Anordnungshöhe des Kraftaufnehmers entspricht.

Wie eingangs erwähnt ist der mit Hilfe des Kraftaufnehmers ermittelte Füllstand von vielen Faktoren, insbesondere von einer Mahlgutdichte, abhängig.

Durch die Kontrolleinheit kann somit zunächst eine erste Aussage über den Füllstand des Vorratsbehälters getroffen werden, da eine Ermittlung von einer Gewichtskraft bedeutet, dass Mahlgut im Vorratsbehälter vorhanden ist und, falls der Kraftaufnehmer im Vorratsbehälter angeordnet ist, dass der Kraftaufnehmer mit Mahlgut beaufschlagt ist.

Alternativ kann, da die ermittelte Gewichtskraft mit einem Füllstand korreliert, jeder beliebiger Füllstand herangezogen werden und bsp. über eine vorläufige Füllstandkurve und die Gewichtskraft-Füllstand-Korrelation ein vorläufiger ersten Füllstand ermittelt werden kann.

Die vorläufige Füllstandkurve kann dabei lediglich mit der gemessenen Gewichtskraft ermittelt werden. Alternativ kann vorgesehen werden, dass der Operator Parameter betreffend das Mahlgut wie z.B. Mahlgrad des Mahlgutes, Walzenspaltbreite der vorgeschalteten Passage usw. eingeben kann, welche zur Ermittlung der vorläufigen Füllstandkurve herangezogen werden.

Mit dem Niveausensor wird zusätzlich ermittelt, ob das Mahlgut einen bestimmten Füllstand-Niveau erreicht hat oder nicht.

Darauf basierend kann die Kontrolleinheit auf einfache Art und Weise, bevorzugt durch Interpolation und/oder Extrapolation, eine charakteristische Füllstandkurve mithilfe des erreichten Füllstand-Niveaus und des ersten Füllstandes ermitteln.

Bei der charakteristischen Füllstandkurve wird jeweils ein Gewichtskraftwert einem Füllstandwert zugeordnet.

Somit kann der manuelle Abgleich zwischen Ist-Niveau und dem tatsächlichen Füllstand entfallen, da dieser nun durch die Kontrolleinheit durchgeführt wird.

Die charakteristische Füllstandkurve wird bevorzugt beim Erreichen des Füllstand-Niveaus ermittelt. Besonders bevorzugt wird die charakteristische Füllstandkurve auch für Füllstände ermittelt, welche höher als das Füllstand-Niveau sind.

Insbesondere kann die Kontrolleinheit derart ausgebildet sein, dass eine charakteristische Füllstandkurve bei jedem Erreichen des Füllstand-Niveaus neu ermittelt wird. Bei einer Abnahme des Füllstandes unterhalb des Füllstand-Niveaus wird die charakteristische Füllstandkurve weiterhin verwendet, wobei bei einer Zunahme des Füllstandes und bei erneutem Erreichen des Füllstand-Niveaus eine neue charakteristische Kurve ermittelt wird.

Zudem kann, alternativ oder zusätzlich, vorgesehen sein, dass die charakteristische Füllstandkurve auch neu ermittelt wird, wenn der Füllstand unterhalb des Füllstand-Niveaus sinkt. Wenn der Füllstand abnimmt kann der Füllstandsensor zur Ermittlung eines Unterschreitens des Füllstand-Niveaus und somit zur Ermittlung der charakteristischen Füllstandkurve verwendet werden.

In diesem Sinne wird gemäss der vorliegenden Erfindung unter "Erreichen eines Füllstand-Niveaus" das Erreichen des Füllstand-Niveaus bei Zunahme des Füllstandes und/oder das Unterschreiten des Füllstand-Niveau bei Abnahme des Füllstanden verstanden.

Bevorzugt ist die Kontrolleinheit ferner dazu ausgebildet, nach der Ermittlung der charakteristischen Füllstandkurve, einen zweiten Füllstand basierend auf einer ermittelten Gewichtskraft und der charakteristischen Füllstandkurve zu ermitteln.

Dadurch kann die Genauigkeit der Füllstandermittlung verbessert werden, da anhand der charakteristischen Füllstandkurve jeder Gewichtskraftwert einem Füllstandwert zugeordnet ist.

Bevorzugt beträgt ein vertikaler Abstand zwischen dem Kraftaufnehmer und dem Niveausensor zwischen 20 und 80 cm, besonders bevorzugt zwischen 40 und 60 cm.

Bevorzugt ist der Niveausensor als kapazitiver Sensor ausgebildet.

Ein kapazitiver Sensor stellt eine besonders einfache, robuste und kostengünstige Möglichkeit zur Ermittlung des Füllstand-Niveaus dar.

Die Erfindung betrifft ferner eine Kontrolleinheit für eine Einlaufanordnung eines Walzenstuhls. Sämtliche, oben beschriebene Vorteile und Weiterbildungen der Einlaufanordnung sind somit auch für eine erfindungsgemässe Kontrolleinheit entsprechend anwendbar.

Die Kontrolleinheit ist dabei mit einem am Vorratsbehälter angeordneten Kraftaufnehmer zur Bestimmung einer durch das Mahlgut ausgeübten Gewichtskraft und mit einem am Vorratsbehälter angeordneten Niveausensor zur Ermittlung des Erreichens eines Mahlgut-Niveaus im Vorratsbehälter verbunden oder verbindbar.

Die Kontrolleinheit ist ferner dazu ausgebildet, aus der von dem Kraftaufnehmer ermittelten Gewichtskraft einen ersten Füllstand des Vorratsbehälters und basierend auf dem ermittelten ersten Füllstand und dem vom Niveausensor ermittelten Füllstand-Niveau eine charakteristische Füllstandkurve zu ermitteln.

Die Erfindung betrifft ferner einen Walzenstuhl mit einer erfindungsgemässen Einlaufanordnung. Sämtliche, oben beschriebene Vorteile und Weiterbildungen der Einlaufanordnung sind somit auch für einen erfindungsgemässen Walzenstuhl entsprechend anwendbar.

Der Walzenstuhl umfasst wenigstens zwei Walzen, die einen Walzenspalt zum Mahlen von Mahlgut definieren, wobei der Walzenspalt mit Mahlgut aus dem Mahlgutauslass der Einlaufvorrichtung versorgt wird.

Die Erfindung betrifft ferner ein Verfahren zur Füllstandermittlung eines Vorratsbehälters für Mahlgut eines Walzenstuhls. Sämtliche, oben beschriebene Vorteile und Weiterbildungen der Einlaufanordnung, der Kontrolleinheit und des Walzenstuhls sind somit auch für ein erfindungsgemässes Verfahren entsprechend anwendbar.

Ein Vorratsbehälter umfasst dabei wenigstens einen Mahlguteinlass, wenigstens einen Mahlgutauslass und wenigstens eine Dosiervorrichtung zum Dosieren von Mahlgut in einen Mahlspalt des Walzenstuhls durch den Mahlgutauslass.

Das erfindungsgemässe Verfahren umfasst die folgenden Schritte:
Zunächst wird eine durch das Mahlgut ausgeübte Gewichtskraft mit einem am Vorratsbehälter angeordneten Kraftaufnehmer ermittelt.

Aus der von dem Kraftaufnehmer ermittelten Gewichtskraft wird dann ein erster Füllstand des Vorratsbehälters ermittelt.

Mit einem am Vorratsbehälter angeordneten Niveausensor wird das Erreichen eines Mahlgut-Niveaus im Vorratsbehälter ermittelt.

Anschliessend wird eine charakteristische Füllstandkurve basierend auf dem ermittelten ersten Füllstand und dem vom Niveausensor ermittelten Fullstand-Niveau ermittelt.

Wie oben bereits erwähnt kann somit mit einer einfachen Sensoranordnung das erfindungsgemässe Verfahren durchgeführt werden. Die vom Kraftaufnehmer ermittelte Gewichtskraft korreliert mit einem Füllstand des Vorratsbehälters. Über diese Korrelation kann somit ein Füllstand ermittelt werden.

Mit dem Niveausensor wird zusätzlich ermittelt, ob das Mahlgut einen bestimmten Füllstand-Niveau erreicht hat oder nicht.

Darauf basierend kann auf einfache Art und Weise eine charakteristische Füllstandkurve ermittelt werden, indem eine Füllstandkurve mithilfe des erreichten Füllstand-Niveaus und des ersten Füllstand, bevorzugt durch Interpolation und/oder Extrapolation, ermittelt wird.

Die Füllstandkurve wird dann zur Ermittlung eines zweiten Füllstandes des Vorratsbehälters mit einer vom Kraftaufnehmer ermittelten Gewichtskraft verwendet.

Somit kann der manuelle Abgleich zwischen Ist-Niveau und dem tatsächlichen Füllstand entfallen, da dieser nun durch die Kontrolleinheit durchgeführt wird.

Die Erfindung wird nachfolgend anhand eines bevorzugten Ausführungsbeispiels in Verbindung mit den Figuren besser beschrieben. Es zeigen:
- Fig. 1: eine schematische Schnittansicht der erfindungsgemässen Einlaufanordnung; und
- Fig. 2: eine schematische Darstellung einer charakteristischen Füllstandkurve.

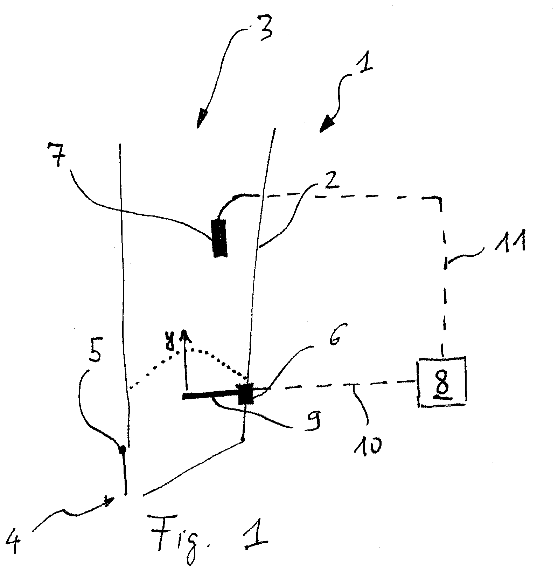

In der Figur 1 ist schematisch eine Einlaufanordnung 1 gezeigt. Die Einlaufanordnung 1 umfasst einen Vorratsbehälter 2 mit einem Mahlguteinlass 3 und einem Mahlgutauslass 4. Am Mahlgutauslass 4 ist ferner eine Dosiervorrichtung 5 angeordnet, welche als Drosselklappe ausgebildet ist. Durch Schwenken der Drosselklappe kann eine Spaltweite des Mahlgutauslasses 4 verändert werden. Am Vorratsbehälter 2 ist ein Kraftaufnehmer 6 angeordnet, welcher einen Ausleger 9 umfasst, der in den Vorratsbehälter 2 hineinragt und beispielsweise als Biegebalken ausgebildet sein kann.

Beim Befüllen des Vorratsbehälters 2 mit Mahlgut wird ein Mahlgutkegel gebildet, welcher schematisch durch die gepunktete Linie dargestellt ist. Sobald der Mahlgutkegel den Ausleger 9 erreicht hat, wird dieser mit einer Gewichtskraft FG belastet. Die Kontrolleinheit 8, welche mit dem Kraftaufnehmer 6 verbunden ist (schematisch durch die gestrichelte Linie 10 dargestellt), erkennt somit, dass ein erster Füllstand A im Vorratsbehälter erreicht worden ist.

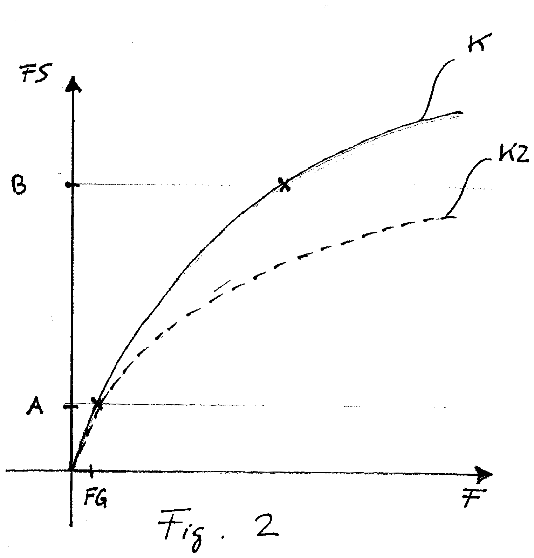

Beim weiteren Befüllen des Vorratsbehälters 2 steigt der Mahlgutkegel uns somit der Füllstand im Vorratsbehälter. Die Steigung des Füllstandes im Vorratsbehälter 2 wird von der Kontrolleinheit 8 durch eine Zunahme der von Kraftaufnehmer 6 ermittelten Gewichtskraft F erkannt. Die Kontrolleinheit 8 kann somit über eine vorläufige charakteristische Füllstandkurve K2, welche in der Figur 2 gestrichelt dargestellt ist, eine vorläufige Füllstandermittlung durchführen.

Wenn der Mahlgutkegel den Niveausensor 7 erreicht hat, wird über die Verbindung 11 (ebenfalls schematisch durch die gestrichelte Linie dargestellt) der Kontrolleinheit 8 ein Signal übermittelt, welches das Erreichen eines Füllstand-Niveaus, das einem Füllstand B entspricht, signalisiert. Die Kontrolleinheit 8 kann somit mit dem ersten Füllstand A und dem Füllstand-Niveau B eine charakteristische Füllstandkurve K ermitteln, welche in der Figur 2 schematisch gezeigt ist.

Die Füllstandkurve K (und analog die vorläufige Füllstandkurve K2) setzt eine gemessene Gewichtskraft F (x-Achse) mit einem Füllstand FS (y-Achse) in Relation. Aus der Figur 2 ist erkennbar, dass mit der Füllstandkurve K für jede vom Kraftaufnehmer 6 ermittelte Gewichtskraft F ein Füllstand FS des Vorratsbehälters 2 von der Kontrolleinheit 8 bestimmt werden kann, welcher Füllstand FS genauer ist als ein Füllstand, welcher lediglich mit Hilfe der vorläufigen Füllstandkurve K2 bestimmbar ist, das die Füllstandkurve K durch Heranziehung des Füllstand-Niveaus B kalibriert worden ist. Ein manueller Abgleich des Ist-Niveaus mit dem tatsächlichen Füllstand des Vorratsbehälters 2 kann somit entfallen.

## Patentansprüche

1. Einlaufanordnung (1) für einen Walzenstuhl umfassend:
- einen Vorratsbehälter (2) mit wenigstens einem Mahlguteinlass (3) und wenigstens einem Mahlgutauslass (4),
- wenigstens eine im Vorratsbehälter (2) angeordnete Dosiervorrichtung (5) zum Dosieren von Mahlgut in einen Mahlspalt des Walzenstuhls durch den Mahlgutauslass (4),
- einen am Vorratsbehälter (2) angeordneten Kraftaufnehmer (6) zur Bestimmung einer durch das Mahlgut ausgeübten Gewichtskraft (FG),
- eine Kontrolleinheit (8), welche mit dem Kraftaufnehmer (6) verbunden oder verbindbar ist,
**dadurch gekennzeichnet, dass** die Einlaufanordnung weiter umfasst:
- einen am Vorratsbehälter (2) angeordneten Niveausensor (7) zur Ermittlung des Erreichens eines Mahlgut-Niveaus (B) im Vorratsbehälter (2),
und, dass die Kontrolleinheit (8) mit dem Niveausensor (7) verbunden oder verbindbar ist,
und, dass
die Kontrolleinheit (8) dazu ausgebildet ist, aus der von dem Kraftaufnehmer (6) ermittelten Gewichtskraft (FG) einen ersten Füllstand (A) des Vorratsbehälters (2) zu ermitteln, wobei die Kontrolleinheit (8) ferner dazu ausgebildet ist, eine charakteristische Füllstandkurve (K) basierend auf dem ermittelten ersten Füllstand (A) und dem vom Niveausensor (7) ermittelten Füllstand-Niveau (B) zu ermitteln.

2. Einlaufanordnung (1) nach Anspruch 1, **dadurch gekennzeichnet, dass** die charakteristische Füllstandkurve (K) beim Erreichen des Füllstand-Niveaus (B) ermittelt wird.

3. Einlaufanordnung (1) nach einem der vorhergehenden Ansprüche, **dadurch gekennzeichnet, dass** die Kontrolleinheit (8) ferner dazu ausgebildet ist, nach der Ermittlung der charakteristischen Füllstandkurve (K), einen zweiten Füllstand basierend auf einer ermittelten Gewichtskraft (F) und der charakteristischen Füllstandkurve (K) zu ermitteln.

4. Einlaufanordnung (1) nach einem der vorhergehenden Ansprüche, **dadurch gekennzeichnet, dass** ein vertikaler Abstand zwischen dem Kraftaufnehmer (6) und dem Niveausensor (7) zwischen 20 und 80 cm beträgt.

5. Einlaufanordnung (1) nach einem der vorhergehenden Ansprüche, **dadurch gekennzeichnet, dass** der Niveausensor (7) ein kapazitiver Sensor ist.

6. Einlaufanordnung (1) nach einem der vorhergehenden Ansprüche, **dadurch gekennzeichnet, dass** die charakteristische Füllstandkurve (K) durch Interpolation und/oder Extrapolation ermittelt wird.

7. Einlaufanordnung (1) nach einem der vorhergehenden Ansprüche, **dadurch gekennzeichnet, dass** der Niveausensor (7) im Vorratsbehälter (2) angeordnet ist.

8. Einlaufanordnung (1) nach einem der vorhergehenden Ansprüche, **dadurch gekennzeichnet, dass** der Kraftaufnehmer (6) im Vorratsbehälter (2) angeordnet ist.

9. Einlaufanordnung (1) nach Anspruch 8, **dadurch gekennzeichnet, dass** der Kraftaufnehmer (6) in einem unteren Bereich des Vorratsbehälters (2) angeordnet ist.

10. Kontrolleinheit (8) für eine Einlaufanordnung (1) mit einem Vorratsbehälter (2) eines Walzenstuhls nach einem der vorhergehenden Patentansprüche, **dadurch gekennzeichnet, dass** die Kontrolleinheit (8) mit einem am Vorratsbehälter (2) angeordneten Kraftaufnehmer (6) zur Bestimmung einer durch das Mahlgut ausgeübten Gewichtskraft (FG) und mit einem am Vorratsbehälter (2) angeordneten Niveausensor (7) zur Ermittlung des Erreichens eines Mahlgut-Niveaus (B) im Vorratsbehälter (2) verbunden oder verbindbar ist, wobei die Kontrolleinheit (8) ferner dazu ausgebildet ist, aus der von dem Kraftaufnehmer (6) ermittelten Gewichtskraft (FG) einen ersten Füllstand (A) des Vorratsbehälters (2) und basierend auf dem ermittelten ersten Füllstand (A) und dem vom Niveausensor (7) ermittelten Füllstand-Niveau (B) eine charakteristische Füllstandkurve (K) zu ermitteln.

11. Walzenstuhl (14) mit wenigstens zwei Walzen, welche einen Walzenspalt definieren, **dadurch gekennzeichnet, dass** der Walzenstuhl ferner eine Einlaufanordnung (1) nach einem der Ansprüche 1 bis 9 umfasst.

12. Verfahren zur Mahlgutfüllstandermittlung eines Vorratsbehälter (2) für Mahlgut eines Walzenstuhls, wobei der Vorratsbehälter wenigstens einen Mahlguteinlass (3), wenigstens einen Mahlgutauslass (4) und wenigstens eine Dosiervorrichtung (5) zum Dosieren von Mahlgut in einen Mahlspalt des Walzenstuhls durch den Mahlgutauslass (4) umfasst, umfassend die folgenden Schritte:
- Bestimmen einer durch das Mahlgut ausgeübten Gewichtskraft (FG) mit einem im Vorratsbehälter (2) angeordneten Kraftaufnehmer (6),
- Ermitteln eines ersten Füllstands (A) des Vorratsbehälter (2) aus der von dem Kraftaufnehmer (6) ermittelten Gewichtskraft,
- Ermitteln des Erreichens eines Mahlgut-Niveaus (B) im Vorratsbehälter (2) mit einem im Vorratsbehälter (2) angeordneten Niveausensor (7),
- Ermitteln einer charakteristischen Füllstandkurve (K) basierend auf dem ermittelten ersten Füllstand (A) und dem vom Niveausensor (7) ermittelten Fullstand-Niveau (B).

13. Verfahren nach Anspruch 12, **dadurch gekennzeichnet, dass** die charakteristische Füllstandkurve (K) durch Interpolation und/oder Extrapolation ermittelt wird.

## Claims

1. An inlet arrangement (1) for a roller mill comprising:
- a storage container (2) with at least one milling material inlet (3) and at least one milling material outlet (4),
- at least one metering device (5) arranged in the storage container (2) for metering milling material into a milling gap of the roller mill through the milling material outlet (4),
- a force transducer (6) arranged on the storage container (2) for determining a weight force (FG) exerted by the milling material,
- a control unit (8) which is connected or connectable to the force transducer (6),
**characterized in that** the inlet arrangement further comprises:
- a level sensor (7) arranged on the storage container (2) for determining when a milling material level (B) has been reached in the storage container (2),
and that the control unit (8) is connected or connectable to the level sensor (7), and that
the control unit (8) is designed to determine a first fill level (A) of the storage container (2) from the weight force (FG) determined by the force transducer (6),
wherein the control unit (8) is further designed to determine a characteristic fill level curve (K) based on the determined first fill level (A) and the milling material level (B) determined by the level sensor (7).

2. Inlet arrangement (1) according to claim 1, **characterized in that** the characteristic fill level curve (K) is determined when the milling material level (B) is reached.

3. Inlet arrangement (1) according to one of the preceding claims, **characterized in that** the control unit (8) is further designed to determine, after the determination of the characteristic fill level curve (K), a second fill level based on a determined weight force (F) and the characteristic fill level curve (K).

4. Inlet arrangement (1) according to one of the preceding claims, **characterized in that** a vertical distance between the force transducer (6) and the level sensor (7) is between 20 and 80 cm.

5. Inlet arrangement (1) according to one of the preceding claims, **characterized in that** the level sensor (7) is a capacitive sensor.

6. Inlet arrangement (1) according to one of the preceding claims, **characterized in that** the characteristic fill level curve (K) is determined by interpolation and/or extrapolation.

7. Inlet arrangement (1) according to one of the preceding claims, **characterized in that** the level sensor (7) is arranged in the storage container (2).

8. Inlet arrangement (1) according to one of the preceding claims, **characterized in that** the force transducer (6) is arranged in the storage container (2).

9. Inlet arrangement (1) according to claim 8, **characterized in that** the force transducer (6) is arranged in a lower region of the storage container (2).

10. Control unit (8) for an inlet arrangement (1) with a storage container (2) of a roller mill according to one of the preceding claims, **characterized in that** the control unit (8) is connected or can be connected to a force transducer (6), arranged on the storage container (2), for determining a weight force (FG) exerted by the milling material, and to a level sensor (7), arranged on the storage container (2), for determining when a milling material level (B) has been reached in the storage container (2), wherein the control unit (8) is further designed to determine a first fill level (A) of the storage container (2) from the weight force (FG) determined by the force transducer (6) and to determine a characteristic fill level curve (K) based on the determined first fill level (A) and the milling material level (B) determined by the level sensor (7).

11. A roller mill (14) comprising at least two rollers defining a gap, **characterized in that** the roller mill further comprises an inlet arrangement (1) according to one of claims 1 to 9.

12. Method for determining the level of milling material in a storage container (2) for milling material of a roller mill, the storage container comprising at least one milling material inlet (3), at least one milling material outlet (4) and at least one metering device (5) for metering milling material into a milling gap of the roller mill through the milling material outlet (4), comprising the following steps:
- Determining a weight force (FG) exerted by the milling material with a force transducer (6) arranged in the storage container (2),
- Determining a first fill level (A) of the storage container (2) from the weight force determined by the force transducer (6),
- Determining the attainment of a milling material level (B) in the storage container (2) with a level sensor (7) arranged in the storage container (2),
- Determining a characteristic fill level curve (K) based on the determined first fill level (A) and the milling material level (B) determined by the level sensor (7).

13. Method according to claim 12, **characterized in that** the characteristic fill level curve (K) is determined by interpolation and/or extrapolation.

## Revendications

1. Un arrangement d'admission (1) pour un broyeur à rouleaux comprenant :
- un réservoir de stockage (2) avec au moins une entrée de matériau de broyage (3) et au moins une sortie de matériau de broyage (4),
- au moins un dispositif de dosage (5) disposé dans le réservoir de stockage (2) pour doser le matériau de broyage dans une fente de broyage du broyeur à rouleaux à travers la sortie de matériau de broyage (4),
- un transducteur de force (6) disposé sur le réservoir de stockage (2) pour déterminer une force de poids (FG) exercée par le matériau de broyage,
- une unité de commande (8) qui est connectée ou peut être connectée au transducteur de force (6),
**caractérisé en ce que** l'arrangement d'entrée comprend en outre :
- un capteur de niveau (7) disposé sur le réservoir de stockage (2) pour déterminer quand un niveau de matériau de broyage (B) a été atteint dans le réservoir de stockage (2),
et que l'unité de commande (8) est connectée ou peut être connectée au capteur de niveau (7), et que
l'unité de commande (8) est conçue pour déterminer un premier niveau de remplissage (A) du réservoir de stockage (2) à partir de la force de poids (FG) déterminée par le transducteur de force (6),
dans lequel l'unité de commande (8) est en outre conçue pour déterminer une courbe de niveau de remplissage caractéristique (K) basée sur le premier niveau de remplissage déterminé (A) et le niveau de matériau de broyage (B) déterminé par le capteur de niveau (7).

2. Arrangement d'admission (1) selon la revendication 1, **caractérisé en ce que** la courbe caractéristique de niveau de remplissage (K) est déterminée lorsque le niveau de matériau de broyage (B) est atteint.

3. Arrangement d'admission (1) selon l'une des revendications précédentes, **caractérisé en ce que** l'unité de commande (8) est en outre conçue pour déterminer, après la détermination de la courbe caractéristique de niveau de remplissage (K), un deuxième niveau de remplissage sur la base d'une force de poids déterminée (F) et de la courbe caractéristique de niveau de remplissage (K).

4. Arrangement d'admission (1) selon l'une des revendications précédentes, **caractérisé en ce qu'**une distance verticale entre le transducteur de force (6) et le capteur de niveau (7) est comprise entre 20 et 80 cm.

5. Arrangement d'admission (1) selon l'une des revendications précédentes, **caractérisé en ce que** le capteur de niveau (7) est un capteur capacitif.

6. Arrangement d'admission (1) selon l'une des revendications précédentes, **caractérisé en ce que** la courbe caractéristique du niveau de remplissage (K) est déterminée par interpolation et/ou extrapolation.

7. Arrangement d'admission (1) selon l'une des revendications précédentes, **caractérisé en ce que** le capteur de niveau (7) est disposé dans le réservoir de stockage (2).

8. Arrangement d'admission (1) selon l'une des revendications précédentes, **caractérisé en ce que** le transducteur de force (6) est disposé dans le réservoir de stockage (2).

9. Arrangement d'admission (1) selon la revendication 8, **caractérisé en ce que** le transducteur de force (6) est disposé dans une région inférieure du réservoir de stockage (2).

10. Unité de commande (8) pour un arrangement d'admission (1) avec un réservoir de stockage (2) d'un broyeur à rouleaux selon l'une des revendications précédentes, **caractérisée en ce que** l'unité de commande (8) est reliée ou peut être reliée à un transducteur de force (6), disposé sur le réservoir de stockage (2), pour déterminer une force de poids (FG) exercée par le matériau de broyage, et à un capteur de niveau (7), disposé sur le réservoir de stockage (2), pour déterminer si un niveau de matière à broyer (B) est atteint dans le réservoir de stockage (2), l'unité de commande (8) étant en outre conçue pour déterminer un premier niveau de remplissage (A) du réservoir de stockage (2) à partir de la force de poids (FG) déterminée par le transducteur de force (6) et pour déterminer une courbe caractéristique de niveau de remplissage (K) sur la base du premier niveau de remplissage (A) déterminé et du niveau de matière à broyer (B) déterminé par le capteur de niveau (7).

11. Broyeur à rouleaux (14) comprenant au moins deux rouleaux définissant une fente, **caractérisée en ce que** le broyeur à rouleaux comprend en outre un arrangement d'admission (1) selon l'une des revendications 1 à 9.

12. Procédé pour déterminer le niveau de matériau de broyage dans un réservoir de stockage (2) pour le matériau de broyage d'un broyeur à rouleaux, le réservoir de stockage comprenant au moins une entrée de matériau de broyage (3), au moins une sortie de matériau de broyage (4) et au moins un dispositif de dosage (5) pour doser le matériau de broyage dans une fente de broyage du broyeur à rouleaux à travers la sortie de matériau de broyage (4), comprenant les étapes suivantes :
- Détermination d'une force de poids (FG) exercée par le matériau de broyage avec un transducteur de force (6) disposé dans le réservoir de stockage (2),
- Déterminer un premier niveau de remplissage (A) du réservoir de stockage (2) à partir de la force de poids déterminée par le transducteur de force (6),
- Détermination de l'atteinte d'un niveau de matériau de broyage (B) dans le réservoir de stockage (2) avec un capteur de niveau (7) disposé dans le réservoir de stockage (2),
- Déterminer une courbe de niveau de remplissage caractéristique (K) basée sur le premier niveau de remplissage déterminé (A) et le niveau de matériau de broyage (B) déterminé par le capteur de niveau (7).

13. Procédé selon la revendication 12, **caractérisé en ce que** la courbe caractéristique du niveau de remplissage (K) est déterminée par interpolation et/ou extrapolation.
